# EUROPEAN PATENT APPLICATION

(11) **EP 4 273 999 A1**
(43) Date of publication of application: **08.11.2023**
(21) Application number: 22207674.7
(22) Date of filing: 16.11.2022
(51) Int. Cl.: H01M 10/60, H01M 50/209, H01M 50/242, H01M 50/244, H01M 50/289, H01M 50/291, H01M 50/35

(54) **BATTERY PACK, ASSEMBLY METHOD FOR BATTERY PACK, AND DISASSEMBLY METHOD FOR BATTERY PACK**

(30) Priority: 06.05.2022 CN 202210489655
(71) Applicant: CALB Co., Ltd., Changzhou City, Jiangsu Province (CN)
(72) Inventor: WANG, Shuaifeng, Changzhou City, Jiangsu Province (CN); YANG, Xulong, Changzhou City, Jiangsu Province (CN); JIANG, Xinwei, Changzhou City, Jiangsu Province (CN)
(74) Representative: Becker, Eberhard

(57) **Abstract**

A battery pack, an assembly method for the battery pack, and a disassembly method for the battery pack are provided. The battery pack includes a battery box (10) and a battery (20). The battery (20) is provided in the battery box (10). The battery box (10) includes a main frame (12), and the main frame (12) includes a first portion (121) and a second portion (122). The first portion (121) and the second portion (122) are stacked up, and the first portion (121) and the second portion (122) are detachably connected to each other. The battery (20) is connected to the first portion (121), or the battery (20) is connected to the second portion (122).

## Description

### BACKGROUND

### Technical Field

The present disclosure relates to the technical field of batteries, in particular to a battery pack, an assembly method for battery pack, and a disassembly method for battery pack.

### Description of Related Art

In the related art, a battery pack may include a plurality of batteries, and the batteries may be arranged in a battery box. Due to the structural limitation of the battery box, the assembly or disassembly of the battery box is complicated.

### SUMMARY

The present disclosure provides a battery pack, an assembly method for the battery pack, and a disassembly method for the battery pack.

In a first aspect of the present disclosure, a battery pack is provided. The battery pack includes a battery box and a battery. The battery is provided in the battery box. The battery box includes a main frame, and the main frame includes a first portion and a second portion. The first portion and the second portion are stacked up, and the first portion and the second portion are detachably connected to each other. The battery is connected to the first portion, or the battery is connected to the second portion.

In a second aspect of the present disclosure, an assembly method for a battery pack is provided. The assembly method includes the following steps. Fixing a battery to a main frame, wherein the main frame includes a first portion and a second portion that are stacked up, and the first portion and the second portion are detachably connected to each other.

In a third aspect of the present disclosure, a disassembly method for a battery pack is provided. The disassembly method includes the following steps. Releasing a connection between a first portion and a second portion that are stacked up, and detaching the first portion or the second portion that is connected to the battery from the battery box along with the battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery pack according to a first exemplary embodiment.
FIG. 2 is a schematic structural view of a battery pack according to a second exemplary embodiment.
FIG. 3 is a schematic structural view of a battery pack according to a third exemplary embodiment.
FIG. 4 is a schematic structural view of a battery pack according to a fourth exemplary embodiment.
FIG. 5 is a schematic structural view of a battery pack according to a fifth exemplary embodiment.
FIG. 6 is a schematic structural view of a battery pack according to a sixth exemplary embodiment.
FIG. 7 is a schematic structural view of a battery pack according to a seventh exemplary embodiment.
FIG. 8 is a schematic structural view of a battery pack according to an eighth exemplary embodiment.
FIG. 9 is a schematic structural view of a battery pack according to a ninth exemplary embodiment.
FIG. 10 is a partial structural view of a battery pack according to the first exemplary embodiment.
FIG. 11 is a schematic view of a partial internal structure of a battery pack according to the first exemplary embodiment.
FIG. 12 is a partial structural view of a battery pack according to the second exemplary embodiment.
FIG. 13 is a partial structural view of a battery pack according to the third exemplary embodiment.
FIG. 14 is a schematic flowchart of an assembly method for a battery pack according to an exemplary embodiment.
FIG. 15 is a schematic flowchart of a disassembly method for a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

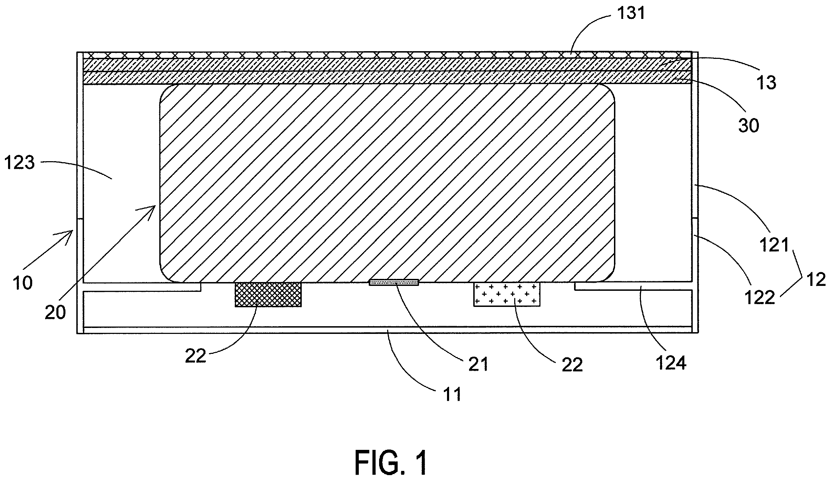

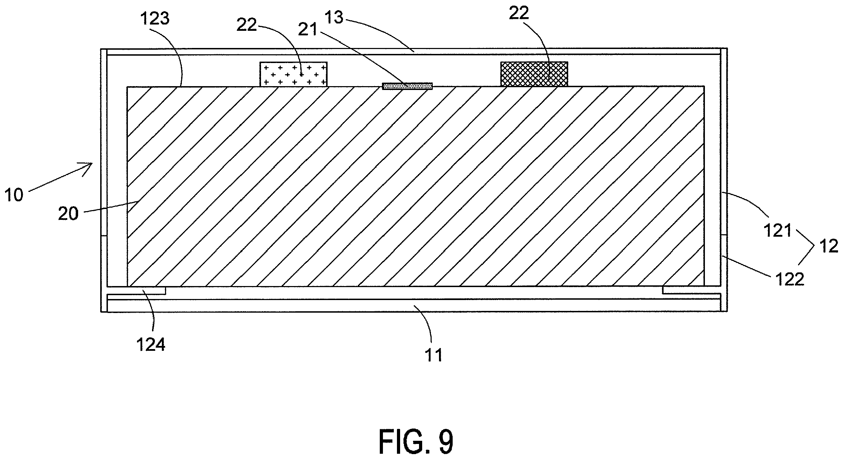

An embodiment of the present disclosure provides a battery pack, please refer to FIG. 1 to FIG. 13. The battery pack includes a battery box 10 and a battery 20, the battery 20 is disposed in the battery box 10, and the battery box 10 includes a main frame 12. The main frame 12 includes a first portion 121 and second portion 122, the first portion 121 and the second portion 122 are stacked up, and the first portion 121 and the second portion 122 are detachably connected to each other. The battery 20 is connected to the first portion 121, or the battery 20 is connected to the second portion 122.

A battery pack in an embodiment of the present disclosure includes a battery box 10 and a battery 20. The battery 20 is provided in the battery box 10. By designing the main frame 12 as the first portion 121 and the second portion 122 that are detachably connected to each other, and the battery 20 is connected to the first portion 121 or the second portion 122, it is possible to facilitate the battery 20 to be assembled and removed along with the first portion 121 or the second portion 122, thereby making it easy to assemble and disassemble the battery 20 and improving the use performance of the battery pack.

In an embodiment, the first portion 121 and the second portion 122 are stacked up, and the first portion 121 is located on the top portion of the second portion 122, so that the first portion 121 and the second portion 122 may be easily assembled and disassembled from top to bottom.

In an embodiment, the first portion 121 and the second portion 122 are stacked up, and the first portion 121 may be disposed on the second portion 122. Under the circumstances, the top portion of the first portion 121 may be aligned with the second portion 122, or the top portion of the first portion 121 may be higher than the second portion 122. For example, the first portion 121 is disposed on the top portion of the second portion 122, or the top portion of the first portion 121 may be lower than the top portion of the second portion 122.

In an embodiment, the battery box 10 further includes a bottom plate 11, and the main frame 12 is connected to the bottom plate 11 to form an accommodating space 123. The battery 20 is arranged in the accommodating space 123, and the bottom plate 11 is connected to a side of the main frame 12 adjacent to the second portion 122. In this manner, the bottom plate 11 may protect the bottom portion of the battery 20. The battery pack in this embodiment may not include the top cover 13.

In an embodiment, as shown in FIG. 1 to FIG. 10, the battery box 10 further includes a top cover 13, and the top cover 13 is connected to one end of the main frame 12 away from the bottom plate 11 to seal the accommodating space 123. The top cover 13 is connected to another side of the main frame 12 adjacent to the first portion 121, so that the top cover 13 and the bottom plate 11 reliably seal the accommodating space 123, so as to effectively protect the battery 20.

It should be noted that, the main frame 12 may include a first opening and a second opening, and the top cover 13 and the bottom plate 11 respectively seal the first opening and the second opening, thereby realizing the sealing of the accommodating space 123. Since the first portion 121 and the second portion 122 of the main frame 12 are detachably connected to each other, when the battery 20 is assembled, the battery 20 may be connected to the first portion 121 or the second portion 122 first, and then the first portion 121 and the second portion 122 are connected subsequently. Accordingly, it is easy to assemble the battery 20, and it is possible to avoid damage caused by the main frame 12 to the battery 20. After all, there is a larger space for avoidance in the process of connecting the battery 20 to the first portion 121 or the second portion 122. In this manner, the assembly efficiency of the battery 20 may be improved, thereby improving the assembly efficiency of the battery pack.

When the battery 20 is disassembled, the battery 20 may be disassembled along with the first portion 121 or the second portion 122, and subsequently the battery 20 is disassembled from the first portion 121 or the second portion 122, so as to facilitate disassembly of the battery 20.

The battery 20 includes a cell and an electrolyte, which is the minimum unit capable of performing electrochemical reactions such as charging/discharging. The cell refers to a unit formed by winding or laminating a stack portion including a first electrode, a separator and a second electrode. When the first electrode is a positive electrode, the second electrode is a negative electrode, and the polarities of the first electrode and the second electrode are interchangeable.

In some embodiments, it is not excluded that the top cover 13 does not seal the accommodating space 123. Under the circumstances, the accommodating space 123 may allow air circulation with the external environment, for example, the battery pack may be used for energy storage devices.

In an embodiment, the top cover 13 is detachably connected to the main frame 12, so that the battery box 10 may be easily disassembled, thereby facilitating subsequent maintenance and replacement of the battery 20. The top cover 13 and the main frame 12 may be engaged with each other, or the top cover 13 and the main frame 12 may be connected through fasteners, for example, the top cover 13 and the main frame 12 may be connected through bolts.

In an embodiment, the bottom plate 11 and the main frame 12 are detachably connected to each other, so that the battery box 10 may be easily disassembled, so as to facilitate the subsequent maintenance and replacement of the battery 20. The bottom plate 11 and the main frame 12 may be engaged with each other, or the bottom plate 11 and the main frame 12 may be connected through fasteners, for example, the bottom plate 11 and the main frame 12 may be connected through bolts.

In an embodiment, the top cover 13 is connected to the first portion 121, and the bottom plate 11 is connected to the second portion 122.

In an embodiment, the top cover 13 is detachably connected to the first portion 121, so that the battery box 10 may be easily disassembled, so as to facilitate subsequent maintenance and replacement of the battery 20. The top cover 13 and the first portion 121 may be engaged with each other, or the top cover 13 and the first portion 121 may be connected through fasteners, for example, the top cover 13 and the first portion 121 may be connected through bolts.

In an embodiment, the top cover 13 and the first portion 121 may be fixedly connected to each other, and when the battery box 10 is disassembled, the top cover 13 and the first portion 121 may be removed together.

In an embodiment, the bottom plate 11 and the second portion 122 are detachably connected to each other, so that the battery box 10 may be easily disassembled, so as to facilitate the subsequent maintenance and replacement of the battery 20. The bottom plate 11 and the second portion 122 may be engaged with each other, or the bottom plate 11 and the second portion 122 may be connected through fasteners, for example, the bottom plate 11 and the second portion 122 may be connected through bolts.

In an embodiment, the bottom plate 11 and the second portion 122 may be fixedly connected to each other, and when the battery box 10 is disassembled, the bottom plate 11 and the second portion 122 may be removed together.

In an embodiment, the first portion 121 and the second portion 122 may be engaged with each other, for example, the first portion 121 and the second portion 122 are connected through protrusion and recess structures. The first portion 121 and the second portion 122 may be connected through other components. For example, the first portion 121 and the second portion 122 are conveniently connected through a connector, so as to realize the connection of the first portion 121 and the second portion 122. One end of the connector may be connected to the first portion 121 through bolts, and the other end of the connector may be connected to the second portion 122 through bolts. The disclosure does not limit the connection method of the first portion 121 and the second portion 122, as long as the first portion 121 and the second portion 122 can be stably connected, and the first portion 121 and the second portion 122 can be conveniently disassembled subsequently.

In an embodiment, the battery 20 is fixedly connected to the first portion 121, so that the battery 20 and the first portion 121 may be disassembled simultaneously, thereby improving the disassembly efficiency of the battery 20.

When the battery 20 is assembled, the battery 20 may be assembled on the first portion 121 first, and the first portion 121 and the second portion 122 are connected subsequently.

In an embodiment, the battery 20 is fixedly connected to the second portion 122, so that the battery 20 and the second portion 122 may be disassembled simultaneously, thereby improving the disassembly efficiency of the battery 20.

When the battery 20 is assembled, the battery 20 may be assembled on the second portion 122 first, and the first portion 121 and the second portion 122 are connected subsequently.

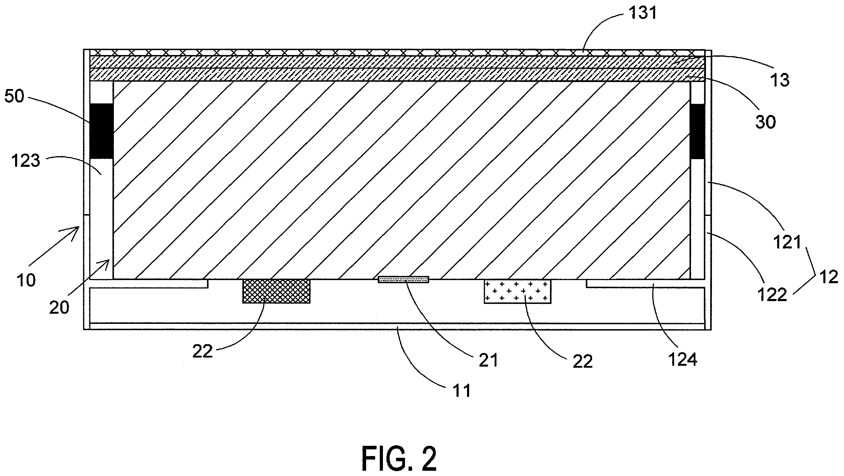

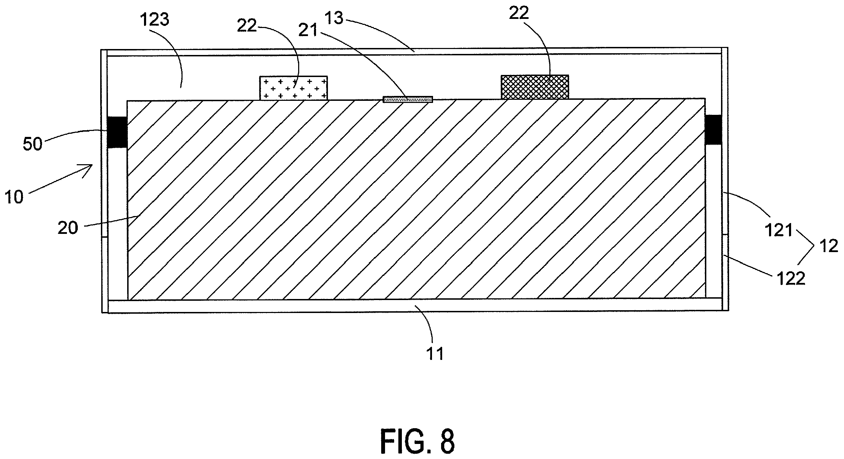

In an embodiment, as shown in FIG. 2 and FIG. 8, the bonding of the battery 20 to the first portion 121 not only facilitates the connection between the battery 20 and the first portion 121, but also ensures the stability of the connection between the battery 20 and the first portion 121, thereby avoiding the battery 20 from shaking and other problems, and thereby improving the safety performance of the battery 20. The battery 20 and the first portion 121 may be bonded through the thermally conductive structural adhesive 50, which can not only ensure the strength of the connection, but also heat transfer may be realized through the thermally conductive structural adhesive 50, thereby improving the heat dissipation capability of the battery 20.

In some embodiments, it is not excluded that the battery 20 and the first portion 121 may be connected through engagement connection or the like.

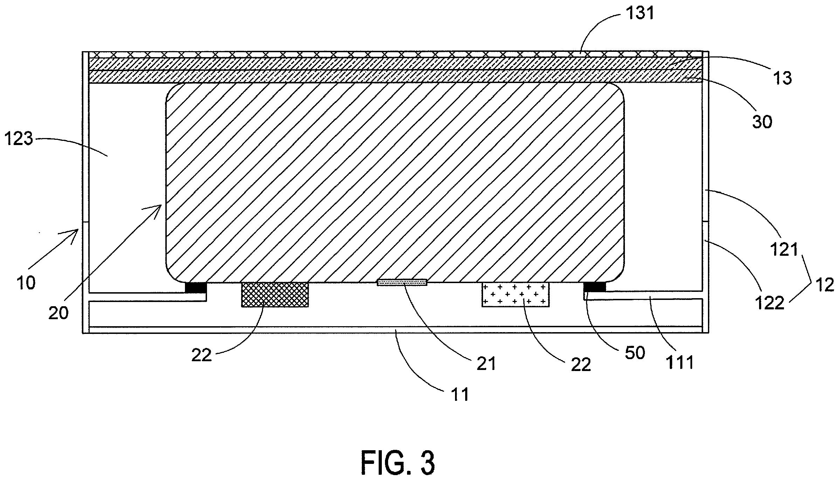

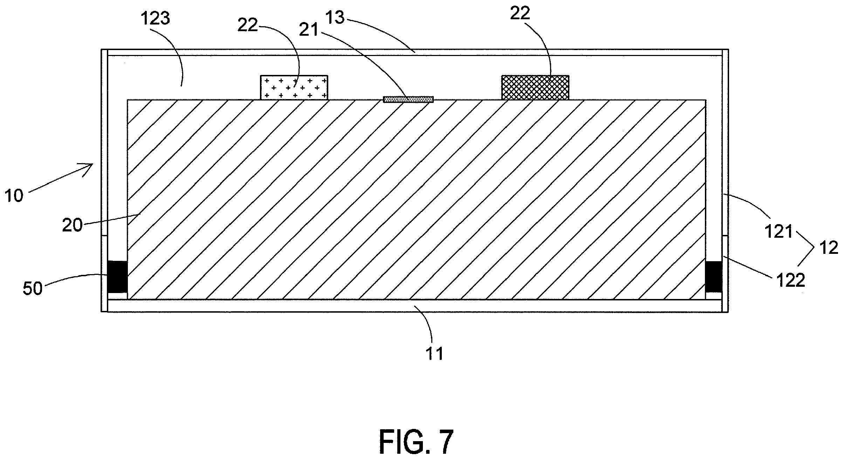

In an embodiment, as shown in FIG. 3 and FIG. 7, the bonding of the battery 20 to the second portion 122 not only facilitates the connection between the battery 20 and the second portion 122, but also ensures the stability of the connection between the battery 20 and the second portion 122, thereby avoiding the battery 20 from shaking and other problems, and thereby improving the safety performance of the battery 20. The battery 20 and the second portion 122 may be bonded through the thermally conductive structural adhesive 50, which can not only ensure the strength of the connection, but also heat transfer may be realized through the thermally conductive structural adhesive 50, thereby improving the heat dissipation capability of the battery 20.

In some embodiments, it is not excluded that the battery 20 and the second portion 122 may be connected through engagement connection or the like.

In an embodiment, as shown in FIG. 1 to FIG. 6 and FIG. 9, the main frame 12 further includes a support portion 124, and the battery 20 is in contact with the support portion 124, such that the support portion 124 limits the position of the battery 20, so as to improve the stability of the battery 20 and avoid problems such as shaking of the battery 20, thereby improving the safety performance of the battery 20.

In an embodiment, as shown in FIG. 1 to FIG. 4, the support portion 124 extends from the second portion 122, and at least part of the battery 20 is located between the support portion 124 and the top cover 13, such that the battery 20 may be fixed between the support portion 124 and the top cover 13 to improve the connection strength between the battery 20 and the battery box 10 and prevent the battery 20 from shaking.

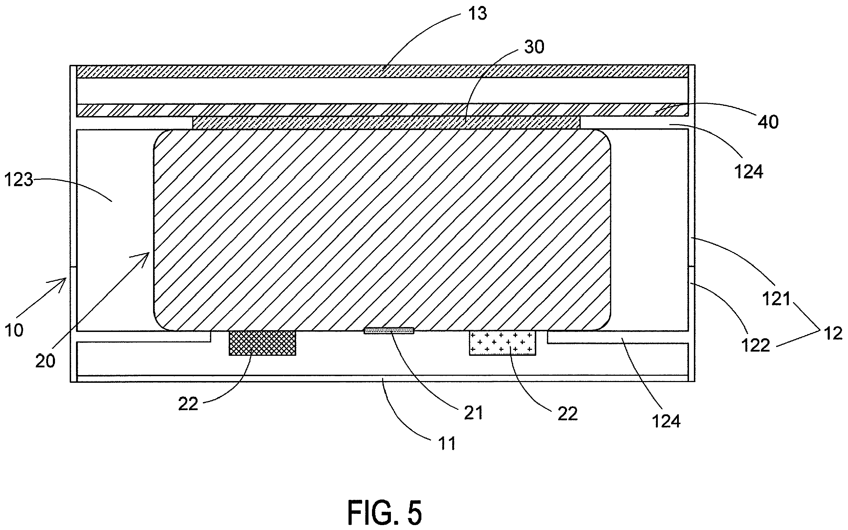

In an embodiment, as shown in FIG. 5, the support portions 124 are arranged in pairs, one support portion 124 extends from the first portion 121, and the other support portion 124 extends from the second portion 122, and at least part of the battery 20 is located between the pair of support portions 124. In this manner, the battery 20 may be fixed between the two support portions 124 arranged opposite to each other, so as to improve the connection strength of the battery 20 and the battery box 10, and prevent the battery 20 from shaking.

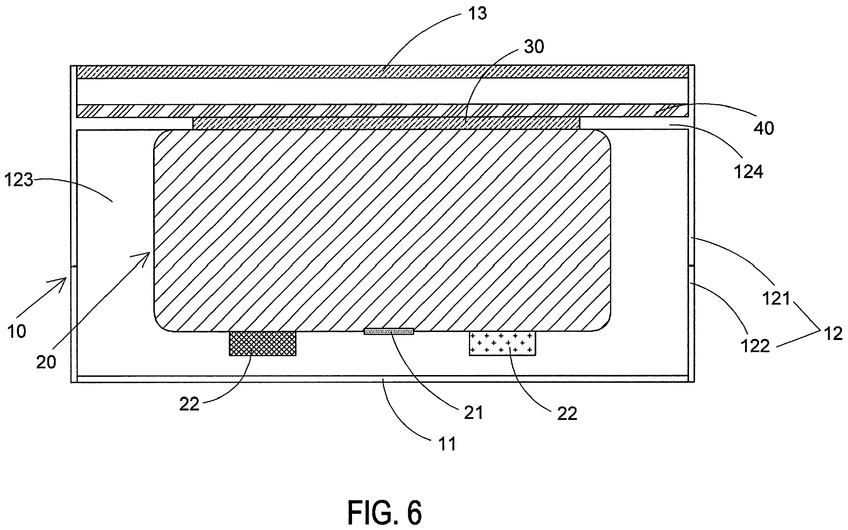

In an embodiment, as shown in FIG. 6, the support portion 124 extends from the first portion 121, and the battery 20 is located between the support portion 124 and the bottom plate 11, so that the battery 20 may be fixed between the support portion 124 and the bottom plate 11. In this way, the connection strength between the battery 20 and the battery box 10 is improved, and it is possible to prevent the battery 20 from shaking.

In an embodiment, the top cover 13 includes a heat exchange channel, the top cover 13 is in contact with the battery 20, so that the top cover 13 may be used to heat or cool the battery 20. The heat exchange channel may be a fluid heat exchange channel, the heat exchange channel may also be a gas heat exchange channel, so as to be used for cooling or heating the battery 20 inside the battery box 10.

The top cover 13 includes a heat exchange channel, that is, a heat exchange channel may be integrated on the top cover 13. Further, it may be regarded that a heat exchange structure is used as the top cover 13 of the battery box 10, so as to achieve heating or cooling of the battery 20. In this way, it is possible to omit the addition of a heat exchange structure to heat or cool the battery 20, thereby reducing the weight of the battery pack.

The top cover 13 and the battery 20 may be in direct contact, that is, the top cover 13 is in contact with the battery 20. Under the circumstances, the heat exchange channel may be used to rapidly heat or cool the battery 20.

In an embodiment, the top cover 13 and the battery 20 may be in indirect contact. As shown in FIG. 1 to FIG. 3, the battery pack further includes a heat conducting portion 30 located between the top cover 13 and the battery 20, so that the top cover 13 and the battery 20 are in contact with each other through the heat conducting portion 30. In this way, heat transfer between the top cover 13 and the battery 20 may be achieved through the heat conducting portion 30.

The heat conducting portion 30 may be a thermally conductive material in the related art. For example, the heat conducting portion 30 may include a graphene sheet, a thermally conductive silicone sheet, a thermally conductive silicone grease, etc., which is not limited in the disclosure.

In an embodiment, the heat conducting portion 30 between the top cover 13 and the battery 20 may be thermally conductive adhesive, which not only realizes heat transfer between the top cover 13 and the battery 20, but also realizes the reliable connection between the top cover 13 and the battery 20, so as to improve the stable performance of the battery 20. The heat conducting portion 30 may be thermally conductive structural adhesive, and the top cover 13 and the battery 20 are bonded through the thermally conductive structural adhesive, which can not only ensure the strength of the connection, but also can realize heat transfer, thereby improving the heat dissipation capability of the battery 20.

In an embodiment, the top cover 13 is fixedly connected to the battery 20, which not only enables the top cover 13 to fix the battery 20, but also the top cover 13 may be used to heat or dissipate the heat of the battery 20. The top cover 13 may be fixedly connected to the battery 20 through the thermally conductive structural adhesive. Alternatively, the top cover 13 may be fixedly connected to the battery 20 through an engaging structure.

In an embodiment, as shown in FIG. 1 to FIG. 3, one side of the top cover 13 facing away from the battery 20 is provided with a thermal insulating layer 131, so as to ensure that the internal temperature of the battery box 10 is kept at a certain level, thereby avoiding the impact on the use performance of the battery pack when the ambient temperature is too low. When the ambient temperature is relatively high, since the top cover 13 has a heat exchange channel, the battery 20 may also be cooled reliably. The thermal insulating layer 131 may be thermal insulation cotton, which can not only perform a thermal insulation function, but also achieves a certain supporting effect. The thermal insulating layer 131 may be a coating, for example, directly coating or spraying thermal insulating material on the top cover 13 to form the thermal insulating layer 131. As such, not only can the thermal insulation effect be achieved, but also space may be saved. The specific material of the thermal insulating layer 131 is not limited in the disclosure, and may be selected according to actual needs.

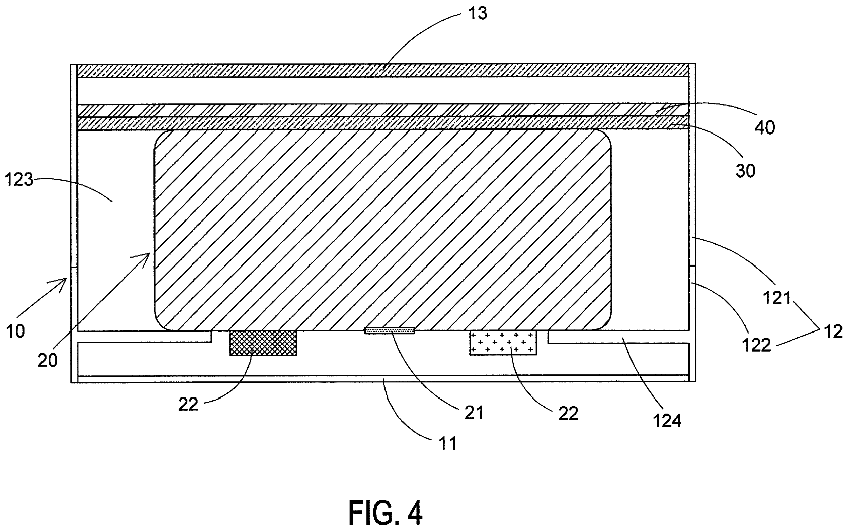

In an embodiment, as shown in FIG. 4 to FIG. 6, the battery pack further includes a temperature adjustment plate 40, the temperature adjustment plate 40 is located between the top cover 13 and the battery 20, and the temperature adjustment plate 40 is in contact with the battery 20, thereby heating or cooling the battery 20 rapidly.

The temperature adjustment plate 40 may be a heat exchange structure in the related art, for example, the temperature adjustment plate 40 may be a liquid cooling plate.

The temperature adjustment plate 40 may be in direct contact with the battery 20, that is, the temperature adjustment plate 40 is attached to the battery 20. Under the circumstances, the temperature adjustment plate 40 may be used to rapidly heat or cool the battery 20.

In an embodiment, the temperature adjustment plate 40 and the battery 20 may be in indirect contact. As shown in FIG. 4 to FIG. 6, the battery pack further includes a heat conducting portion 30 located between the temperature adjustment plate 40 and the battery 20 to bring the temperature adjustment plate 40 into contact with the battery 20 through the heat conducting portion 30. In this way, the heat transfer between the temperature adjustment plate 40 and the battery 20 may be achieved through the heat conducting portion 30.

The heat conducting portion 30 may be a thermally conductive material in the related art. For example, the heat conducting portion 30 may include a graphene sheet, a thermally conductive silicone sheet, a thermally conductive silicone grease, etc., which is not limited in the disclosure.

In an embodiment, the heat conducting portion 30 between the temperature adjustment plate 40 and the battery 20 may be thermally conductive adhesive, which not only realizes heat transfer between the temperature adjustment plate 40 and the battery 20, but also realizes the reliable connection between the temperature adjustment plate 40 and the battery 20, so as to improve the stable performance of the battery 20. The heat conducting portion 30 can be thermally conductive structural adhesive, and the temperature adjustment plate 40 and the battery 20 are bonded through the thermally conductive structural adhesive, which can not only ensure the strength of the connection, but also can realize heat transfer, thereby improving the heat dissipation capability of the battery 20.

In an embodiment, the temperature adjustment plate 40 and the top cover 13 may be disposed at intervals, and a thermal insulating structure may be disposed between the temperature adjustment plate 40 and the top cover 13. For example, there may be a thermal insulation cotton disposed between the temperature adjustment plate 40 and the top cover 13, and the thermal insulation cotton may serve thermal insulation and supporting functions. The temperature adjustment plate 40 and the top cover 13 may also be in direct contact, so as to improve the space utilization of the battery box 10.

In an embodiment, the temperature adjustment plate 40 is fixedly connected to the battery 20, not only can the temperature adjustment plate 40 realize the fixing of the battery 20, but also the temperature adjustment plate 40 may be used for heating or heat dissipation of the battery 20. The temperature adjustment plate 40 may be fixedly connected to the battery 20 through the thermally conductive structural adhesive. Alternatively, the temperature adjustment plate 40 may be fixedly connected to the battery 20 through an engaging structure.

In an embodiment, as shown in FIG. 1 to FIG. 6, the battery 20 includes a pressure relief structure 21, and the pressure relief structure 21 is disposed toward the bottom plate 11. The pressure relief structure 21 and the bottom plate 11 are disposed at intervals, so as to ensure that the pressure relief structure 21 may be broken through when the pressure inside the battery 20 reaches a certain level. In this way, the gas may be discharged from the inside of the battery 20, thereby avoiding safety problems.

It should be noted that the pressure relief structure 21 of the battery 20 may be a pressure relief structure in the related art, such as an explosion-proof film, an explosion-proof valve and other structures, the disclosure is not limited thereto.

In an embodiment, as shown in FIG. 1 to FIG. 6, the battery 20 further includes a terminal assembly 22. The terminal assembly 22 and the pressure relief structure 21 are located on the same side of the battery 20. The terminal assembly 22 and the bottom plate 11 are arranged at intervals to ensure a safety distance between the terminal assembly 22 and the bottom plate 11 and prevent the bottom plate 11 from damaging the terminal assembly 22.

The main frame 12 may include two openings opposite to each other, and a top cover 13 may block the first opening of the main frame 12, and the opening may face the passenger compartment of a vehicle. The bottom plate 11 may block the second opening of the main frame 12, and the pressure relief structure 21 and the terminal assembly 22 of the battery 20 both face the bottom plate 11. In this manner, it is possible to prevent the gas discharged from the pressure relief structure 21 from being directly sprayed toward the first opening. To a certain extent, it is possible to prevent thermal runaway from occurring to the battery 20 to cause safety problems. Moreover, since the pressure relief structure 21 and the terminal assembly 22 face the bottom plate 11, while ensuring a certain gap is formed between the battery 20 and the bottom plate 11, the pressure relief structure 21 and the terminal assembly 22 may make reasonable use of the gap, thereby increasing the space utilization of the battery box 10.

At present, in order to improve the energy density of batteries, cathode materials with high nickel content are selected in most cases. In ternary materials, such as nickel-cobalt-manganese materials, the nickel content accounts for more than 60 wt%, which is normally called high-nickel materials. While the energy density is improved, the heat of thermal runaway of a battery using high nickel materials can be as high as 1000°C or higher, which is greater than the melting point of the current common materials, such as aluminum and steel, adopted for the top cover 13. Therefore, the gas caused by thermal runaway will burn through the top cover 13 and directly affect the passenger compartment, thereby causing great safety hazards. By arranging the pressure relief structure 21 and the terminal assembly 22 toward the bottom plate 11, it is possible to avoid the impact on the passenger compartment to a large extent when thermal runaway occurs, and protect the safety of passengers. Typically, the terminal assembly 22 is connected with a bus bar to realize the electrical connection between the batteries 20. However, in order to ensure the safety performance of the battery pack, a certain electrical gap is normally left between the battery box 10 and the bus bar. By arranging both the pressure relief structure 21 and the terminal assembly 22 to face the bottom plate 11, while ensuring a certain gap between the battery body 20 and the bottom plate 11, the pressure relief structure 21 and the terminal assembly 22 may make reasonable use of the gap, thereby increasing the space utilization of the battery box 10. It should be noted that the top cover 13 may block the first opening of the main frame 12, and the pressure relief structure 21 and the terminal assembly 22 of the battery 20 are both disposed toward the bottom plate 11, that is, when thermal runaway occurs to the battery 20, the pressure relief structure 21 is destroyed, so that the gas inside the battery 20 is ejected. Under the circumstances, the ejected gas may be directly sprayed to the bottom plate 11, and when the gas flows to the top cover 13, both heat and pressure will be decreased to a certain extent at this time, the damage caused by the gas to the top cover 13 will be reduced, and the first opening of the main frame 12 is arranged toward the passenger compartment of the vehicle, such that it is possible to prevent the gas ejected from the pressure relief structure 21 from being directly ejected into the passenger compartment, thereby improving the safety performance of the vehicle.

The bottom plate 11 of the battery pack must meet the ball hitting standard. Under the circumstances, there is a gap between the battery 20 and the bottom plate 11 to ensure anticollision and buffering. When the terminal assembly 22 faces the bottom plate 11, this gap may perfectly serve as a safety gap between the terminal assembly 22 and the battery box 10, so that the space of the battery box 10 is reasonably utilized to improve the space utilization of the battery box 10.

Referring to FIG. 1 to FIG. 4, the pressure relief structure 21 and the terminal assembly 22 may be disposed toward the bottom plate 11, and the top cover 13 and the support portion 124 on the second portion 122 may fix the battery 20.

With reference to FIG. 5, the pressure relief structure 21 and the terminal assembly 22 may be disposed toward the bottom plate 11, and the support portion 124 on the first portion 121 and the support portion 124 on the second portion 122 may fix the battery 20.

With reference to FIG. 6, the pressure relief structure 21 and the terminal assembly 22 may be disposed toward the bottom plate 11. The battery 20 may be located between the support portion 124 on the first portion 121 and the bottom plate 11, and a support structure (not shown in the figure) may be disposed between the battery 20 and the bottom plate 11. The support structure serves to ensure that a gap is formed between both the pressure relief structure 21 and the terminal assembly 22 the bottom plate 11. The support structure may be selected according to actual needs, for example, the support structure may be an adhesive layer, the support structure may be a positioning bracket and so on.

In an embodiment, as shown in FIG. 7 to FIG. 9, the battery 20 includes a pressure relief structure 21 and a terminal assembly 22. The pressure relief structure 21 and the terminal assembly 22 may both be disposed toward the top cover 13, and the bottom plate 11 may include a heat exchange channel. The battery 20 and the bottom plate 11 may be in direct contact, or the battery 20 and the bottom plate 11 may be in contact through the heat conducting portion 30, which is not limited in the disclosure.

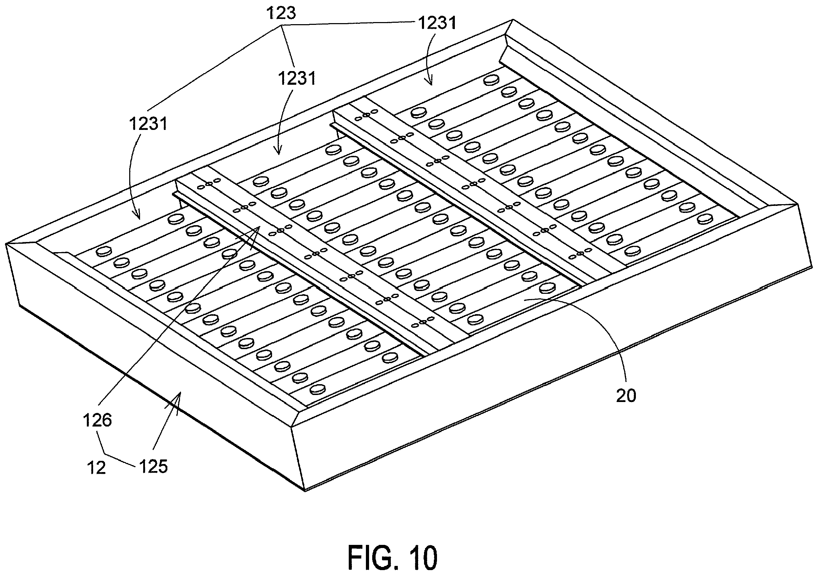

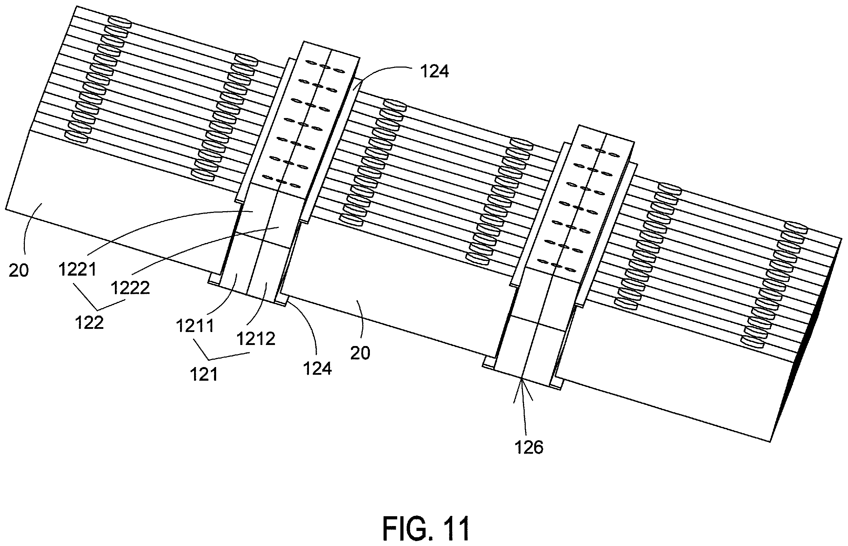

In an embodiment, as shown in FIG. 10 and FIG. 11, the main frame 12 includes a side beam 125 and a partition beam 126. The side beam 125 is arranged around the bottom plate 11 to form an accommodating space 123. The partition beam 126 is located on the inner side of the side beam 125 to separate the accommodating space 123 into at least two sub-accommodating spaces 1231. The partition beam 126 includes a first portion 121 and a second portion 122, so that the partition beam 126 may be easily disassembled, thereby facilitating the battery 20 to be quickly removed from the side beam 125 through the partition beam 126.

The partition beam 126 may be connected to the side beam 125, and the battery 20 may be connected to at least one of the first portion 121 and the second portion 122 of the partition beam 126, and the partition beam 126 may be detachably connected to the side beam 125, so that at least one of the first portion 121 and the second portion 122 carrying the battery 20 may be quickly removed from the side beam 125 together.

The top cover 13 may be connected to the side beam 125, and the top cover 13 may be connected to the partition beam 126. The bottom plate 11 may be connected to the side beam 125, and the bottom plate 11 may be connected to the partition beam 126.

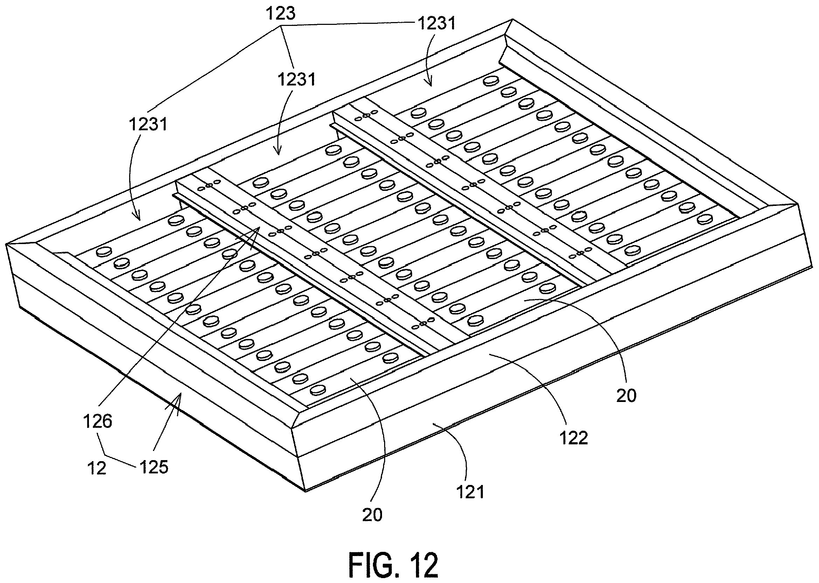

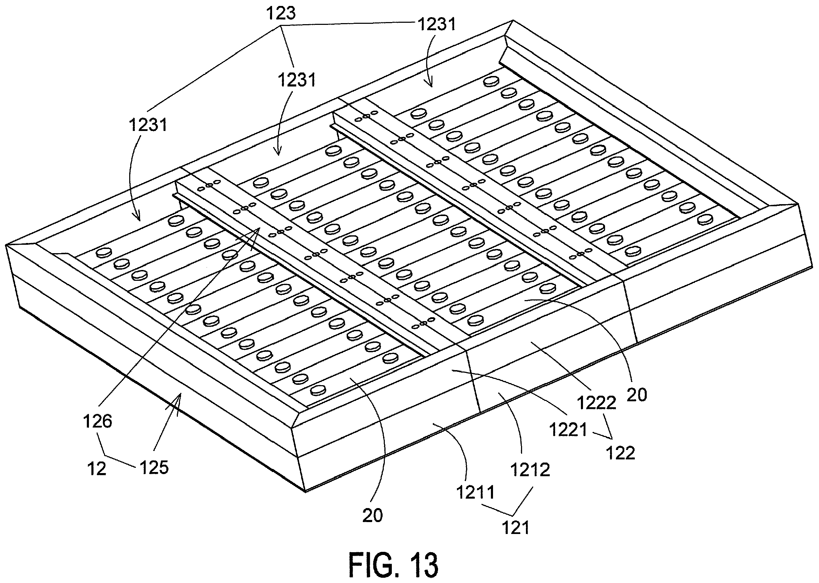

In an embodiment, as shown in FIG. 12 and FIG. 13, the main frame 12 includes a side beam 125 that surrounds the bottom plate 11 to form an accommodating space 123. The side beam 125 includes at least part of the first portion 121 and the second portion 122, so that the first portion 121 and the second portion 122 may serve as protection in the circumferential direction for the battery 20.

It should be noted that the arrangement of the side beam 125 surrounding the bottom plate 11 does not refer to a specific configuration, and the emphasis lies in that the side beam 125 forms a circumferentially-closed space. The side beam 125 is connected to the bottom plate 11, and the side beam 125 may be disposed on the bottom plate 11, or the side beam 125 may be connected to the circumferential edge of the bottom plate 11, which is not limited in the disclosure. The side beam 125 may include a lateral beam, the side beam 125 may include an inner reinforcement member, the reinforcement member may be connected to the lateral beam, and the reinforcement member may be a beam. For example, the beam and the lateral beam are welded together, or the beam and the lateral beam are integrally formed. The reinforcement member may also be a plate, and the plate may be connected to the lateral beam. The specific structure of the side beam 125 is not limited in the disclosure, and the main purpose is to illustrate that the side beam 125 may form a circumferentially closed space.

In an embodiment, the side beam 125 may include all of the first portion 121 and the second portion 122, and the side beam 125 may form an accommodating space 123. A plurality of batteries 20 are arranged in one accommodating space 123, and the plurality of batteries 20 may be connected in series or in parallel through bus bars. For example, the terminal assemblies 22 of two adjacent batteries 20 are connected through bus bars. The battery 20 may include two terminal assemblies 22, which are respectively a positive terminal assembly and a negative terminal assembly.

In an embodiment, as shown in FIG. 12 and FIG. 13, the main frame 12 further includes a partition beam 126, and the partition beam 126 is located at the inner side of the side beam 125 to separate the accommodating space 123 into at least two sub-accommodating spaces 1231. There are a plurality of batteries 20, and the plurality of batteries 20 include a first battery and a second battery, and the first battery and the second battery are respectively disposed in the two sub-accommodating spaces 1231. In this way, the batteries 20 in the two adjacent sub-accommodating spaces 1231 do not interfere with each other, so as to improve the safety performance of the battery pack.

There may be one or more partition beams 126, which is not limited in the disclosure, and the number of partition beams 126 may be selected according to actual needs.

In an embodiment, the side beam 125 includes a part of the first portion 121 and the second portion 122, and the partition beam 126 includes another part of the first portion 121 and the second portion 122, thereby dividing the overall main frame 12 into the first portion 121 and the second portion 122. Through the detachable connection between the first portion 121 and the second portion 122, the battery 20 may be easily assembled and disassembled.

In an embodiment, as shown in FIG. 11 and FIG. 13, the first portion 121 includes a first segment 1211 and a second segment 1212. The first segment 1211 and the second segment 1212 are detachably connected, the first battery is fixed on the first segment 1211, and the second battery is fixed on the second segment 1212, so as to prevent the second battery from blocking the first battery and the first segment 1211 from being simultaneously removed from the battery box 10, or to prevent the first battery from blocking the second battery and the second segment 1212 from being simultaneously removed from the battery box 10.

The battery 20 may be detached from the battery box 10 along with the first portion 121. Moreover, by setting the first portion 121 as the first segment 1211 and the second segment 1212 that are detachably connected, while the first segment 1211 and the second segment 1212 respectively belong to the two sub-accommodating spaces 1231, and the first battery and the second battery are respectively provided in the two sub-accommodating spaces 1231, when the first battery or the second battery needs to be maintained or replaced, it is possible to only remove the first battery and the first segment 1211 from the battery box 10 simultaneously without removing the second battery. Alternatively, it is possible to only remove the second battery and the second segment 1212 from the battery box 10 simultaneously without removing the first battery, so as to facilitate the maintenance of the battery pack and reduce the maintenance cost.

In an embodiment, as shown in FIG. 11 and FIG. 13, the second portion 122 includes a third segment 1221 and a fourth segment 1222. The third segment 1221 and the fourth segment 1222 are detachably connected, the first battery is fixed on the third segment 1221, and the second battery is fixed on the fourth segment 1222, so as to prevent the second battery from blocking the first battery and the third segment 1221 from being simultaneously removed from the battery box 10, or to prevent the first battery from blocking the second battery and the fourth segment 1222 from being simultaneously removed from the battery box 10.

The battery 20 may be detached from the battery box 10 along with the second portion 122. Moreover, by setting the second portion 122 as the third segment 1221 and the fourth segment 1222 that are detachably connected, while the third segment 1221 and the fourth segment 1222 respectively belong to the two sub-accommodating spaces 1231, and the first battery and the second battery are respectively provided in the two sub-accommodating spaces 1231, when the first battery or the second battery needs to be maintained or replaced, it is possible to only remove the first battery and the third segment 1221 from the battery box 10 simultaneously without removing the second battery. Alternatively, it is possible to only remove the second battery and the fourth segment 1222 from the battery box 10 simultaneously without removing the first battery, so as to facilitate the maintenance of the battery pack and reduce the maintenance cost.

It should be noted that, as shown in FIG. 10 and FIG. 11, the partition beam 126 may include a first portion 121 and a second portion 122, and the first portion 121 may include the first segment 1211 and the second segment 1212, while the second portion 122 may include the third segment 1221 and the fourth segment 1222. Referring to FIG. 12, the side beam 125 and the partition beam 126 include the first portion 121 and the second portion 122, the first portion 121 of the partition beam 126 may include the first segment 1211 and the second segment 1212, and the second portion 122 of the partition beam 126 may include the third segment 1221 and the fourth segment 1222. Referring to FIG. 13, the side beam 125 and the partition beam 126 include the first portion 121 and the second portion 122, the side beam 125 and the first portion 121 of the partition beam 126 may include the first segment 1211 and the second segment 1212, and the side beam 125 and the second portion 122 of the partition beam 126 may include the third segment 1221 and the fourth segment 1222.

It should be noted that the two sub-accommodating spaces 1231 may be respectively provided with a plurality of first batteries and a plurality of second batteries, and the first batteries and the second batteries may be identical batteries, or, the first batteries and the second batteries may be different batteries. The batteries in the two independent sub-accommodating spaces 1231 are expected to be disassembled separately, and therefore the first portion 121 or the second portion 122 may be disassembled twice to meet the requirement of separate disassembly.

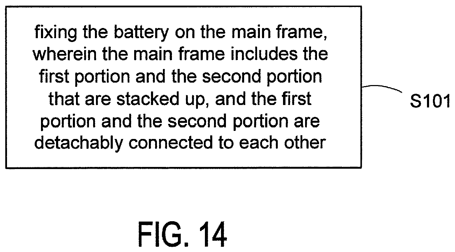

An embodiment of the present disclosure further provides an assembly method for a battery pack, please refer to FIG. 14. The assembly method for the battery pack includes the step S101, fixing the battery 20 on the main frame 12, wherein the main frame 12 includes the first portion 121 and the second portion 122 that are stacked up, and the first portion 121 and the second portion 122 are detachably connected to each other.

In the assembly method for the battery pack in an embodiment of the present disclosure, by fixing the battery 20 on the main frame 12, and the main frame 12 is designed as the first portion 121 and the second portion 122 that are detachably connected to each other, it is possible to facilitate the assembly of the battery box 10, thereby facilitating the assembly of the battery 20 and improving the assembly efficiency of the battery pack.

It should be noted that the first portion 121 and the second portion 122 are stacked up, so it may be regarded that when the battery pack is in use, the first portion 121 is located above the second portion 122. Furthermore, the main frame 12 may include a first opening and a second opening, the first portion 121 and the second portion 122 include a first opening and a second opening, respectively, and the top cover 13 and the bottom plate 11 respectively seal the first opening and the second opening. Since the first portion 121 and the second portion 122 of the main frame 12 are detachably connected to each other, when the battery 20 is assembled, the battery 20 may be connected to the first portion 121 or the second portion 122 first, and then the first portion 121 and the second portion 122 are connected subsequently. Accordingly, it is easy to assemble the battery 20, and it is possible to avoid damage caused by the main frame 12 to the battery 20. After all, there is a large space for avoidance in the process of connecting the battery 20 to the first portion 121 or the second portion 122. In this manner, the assembly efficiency of the battery 20 may be improved, thereby improving the assembly efficiency of the battery pack.

In an embodiment, the step of fixing the battery 20 on the main frame 12 includes as follows. After connecting the battery 20 to the first portion 121 or the second portion 122, connecting the first portion 121 and the second portion 122, so that the battery 20 may be independently arranged on the first portion 121 or the second portion 122, which not only can provide a larger avoidance space, thereby improving the assembly efficiency of the battery 20, and it is not easy to cause damage to the battery 20.

The battery 20 may be connected to the first portion 121 first, and then the first portion 121 and the second portion 122 may be connected afterwards. Alternatively, the battery 20 may be connected to the second portion 122 first, and then the first portion 121 and the second portion 122 may be connected afterwards.

The battery 20 may be bonded to the first portion 121, and the battery 20 and the first portion 121 may be bonded through a thermally conductive structural adhesive, which can not only ensure the strength of the connection, but also can realize heat transfer, thereby improving the heat dissipation capability of the battery 20.

The battery 20 may be bonded to the second portion 122, and the battery 20 and the second portion 122 may be bonded through a thermally conductive structural adhesive, which can not only ensure the strength of the connection, but also can realize heat transfer, thereby improving the heat dissipation capability of the battery 20.

In an embodiment, fixing the battery on the main frame 12 includes the following. After connecting the first portion 121 and the second portion 122, connecting the battery 20 to at least one of the first portion 121 and the second portion 122, such that the assembly efficiency of the battery pack may be improved, and the connection stability of the battery 20 may be ensured.

In an embodiment, the assembly method for the battery pack further includes the following. Connecting the main frame 12 and the bottom plate 11, and connecting the main frame 12 and the top cover 13 to seal the accommodating space 123 for placing the battery 20, so that the battery 20 may be effectively protected.

The main frame 12 may include a first opening and a second opening, and the top cover 13 and the bottom plate 11 respectively close the first opening and the second opening, thereby realizing the sealing of the accommodating space 123.

In an embodiment, after the battery 20 is fixed on the main frame 12 and the connection between the first portion 121 and the top cover 13 is completed, the main frame 12 and the top cover 13 are inverted so that the opening of the main frame 12 faces upward, and the bottom plate 11 is connected to the main frame 12 to block the opening of the main frame 12.

When the top cover 13 is connected to the main frame 12, the first opening of the main frame 12 faces upward, and when connecting the bottom plate 11, the second opening of the main frame 12 needs to face upward to facilitate the connection of the bottom plate 11. During the inversion process of the main frame 12 and the top cover 13, since the battery 20 is fixed on the main frame 12, no positional change will occur.

In an embodiment, at least part of the first portion 121 and the second portion 122 forms a side beam 125, the bottom plate 11 is connected to the second portion 122, and the top cover 13 is connected to the first portion 121, so that the bottom plate 11 and the top cover 13 seal the main frame 12.

A sealing structure may be provided between the first portion 121 and the second portion 122 to ensure reliable sealing between the first portion 121 and the second portion 122.

In an embodiment, the first portion 121 and the second portion 122 form a partition beam 126, the bottom plate 11 and the top cover 13 are both connected to the side beam 125, that is, the partition beam 126 may be connected to the side beam 125, and the partition beam 126 may facilitate the battery 20 to be separated from the side beam 125 along with the partition beam 126. The bottom plate 11 and the top cover 13 achieve sealing of the main frame 12.

In an embodiment, the first portion 121 and the second portion 122 form a partition beam 126, and the bottom plate 11 and the top cover 13 are respectively connected to the second portion 122 and the first portion 121, that is, the partition beam 126 may be used to fix the bottom plate 11 and the top cover 13.

In an embodiment, the first portion 121 and the second portion 122 form a partition beam 126. After the battery 20 is connected to at least one of the first portion 121 and the second portion 122, the connected first portion 121 and the second portion 122 are connected to the side beam 125, so that the battery 20 is arranged in the side beam 125. When the battery 20 is disassembled, it is only necessary to remove at least part of the partition beam 126 from the side beam 125, so as to realize the disassembly of the battery 20.

In an embodiment, the pressure relief structure 21 and the terminal assembly 22 of the battery 20 are disposed toward the bottom plate 11, so that the pressure relief structure 21 and the bottom plate 11 may be arranged at intervals. In this way, it may be ensured that the pressure relief structure 21 may be broken through when the pressure inside the battery 20 reaches a certain level. Accordingly, the gas may be discharged from the inside of the battery 20 to avoid causing safety problems, and the terminal assembly 22 may be spaced from the bottom plate 11 to ensure a safety distance between the terminal assembly 22 and the bottom plate 11, so as to prevent the bottom plate 11 from damaging the terminal assembly 22.

In an embodiment, the pressure relief structure 21 and the terminal assembly 22 of the battery 20 are disposed toward the bottom plate 11, and the second portion 122 is provided with a support portion 124. One side of the battery 20 provided with the pressure relief structure 21 and the terminal assembly 22 is disposed on the support portion 124 of the main frame 12, and the battery 20 and the support portion 124 are fixed. Thereafter, the top cover 13 is connected to the first portion 121, and the main frame 12 and the top cover 13 may be inverted so that the opening of the main frame 12 faces upwards, and the bottom plate 11 is connected to the second portion 122.

In an embodiment, the pressure relief structure 21 and the terminal assembly 22 of the battery 20 are disposed toward the bottom plate 11, a support portion 124 is disposed on the first portion 121, and the other side facing away from one side of the battery 20 provided with the pressure relief structure 21 and the terminal assembly 22 is disposed on the support portion 124 of the main frame 12. In this way, the fixing of the battery 20 and the support portion 124 is realized. Subsequently, the bottom plate 11 may be connected to the second portion 122, and the main frame 12 and the bottom plate 11 may be inverted so that the opening of the main frame 12 faces upwards and the top cover 13 is connected to the first portion 121. In this embodiment, the pressure relief structure 21 and the terminal assembly 22 are disposed toward the bottom plate 11. Under the circumstances, it is necessary to ensure that there is a gap formed between the pressure relief structure 21 and the bottom plate 11, and there is a gap formed between the terminal assembly 22 and the bottom plate 11.

In an embodiment, the pressure relief structure 21 and the terminal assembly 22 of the battery 20 are disposed toward the bottom plate 11. The assembly method of the battery pack further includes the following. Before connecting the bottom plate 11 to the main frame 12, connecting adjacent batteries 20 through bus bars, so as to realize the direct series connection or parallel connection of the batteries 20.

In an embodiment, the pressure relief structure 21 and the terminal assembly 22 of the battery 20 are disposed toward the top cover 13, a support portion 124 is disposed on the first portion 121, and one side of the battery 20 provided with the pressure relief structure 21 and the terminal assembly 22 is disposed on the support portion 124 of the main frame 12. In this way, the fixing of the battery 20 and the support portion 124 is realized. Subsequently, the bottom plate 11 may be connected to the second portion 122, and the main frame 12 and the bottom plate 11 may be inverted so that the opening of the main frame 12 faces upwards, and the top cover 13 is connected to the first portion 121.

In an embodiment, the pressure relief structure 21 and the terminal assembly 22 of the battery 20 are disposed toward the top cover 13, a support portion 124 is disposed on the second portion 122, and the other side facing away from one side of the battery 20 provided with the pressure relief structure 21 and the terminal assembly 22 is disposed on the support portion 124 of the main frame 12. In this way, the fixing of the battery 20 and the support portion 124 is realized. Subsequently, the top cover 13 is connected to the first portion 121, and the main frame 12 and the top cover 13 may be inverted so that the opening of the main frame 12 faces upwards and the bottom plate 11 is connected to the second portion 122.

In an embodiment, the pressure relief structure 21 and the terminal assembly 22 of the battery 20 are disposed toward the top cover 13, and the assembly method of the battery pack further includes the following. Before connecting the top cover 13 to the main frame 12, connecting adjacent batteries 20 through bus bars to realize direct series connection or parallel connection of the batteries 20.

In an embodiment, the assembly method for battery pack further includes the following. Contacting the top cover 13 with the battery 20 through the heat conducting portion 30, so that heat transfer between the top cover 13 and the battery 20 may be achieved through the heat conducting portion 30. The heat conducting portion 30 may be a thermally conductive structural adhesive, and the top cover 13 and the battery 20 are bonded through the thermally conductive structural adhesive, which can not only ensure the strength of the connection, but also can realize heat transfer, thereby improving the heat dissipation capability of the battery 20.

In an embodiment, the assembly method for battery pack further includes the following. Arranging a temperature adjustment plate 40 between the top cover 13 and the battery 20, wherein the temperature adjustment plate 40 is in contact with the battery 20, so that heat transfer between the top cover 13 and the battery 20 is realized through the temperature adjustment plate 40. The temperature adjustment plate 40 is in contact with the battery 20 through the heat conducting portion 30.

It should be noted that it is not excluded that the top cover 13 and the first portion 121 may be connected before the battery 20 is arranged. For example, the top cover 13 is connected to the first portion 121, and the battery 20 is fixed on the second portion 122, and the first portion 121 and the second portion 122 are connected afterwards. It is not excluded that the bottom plate 11 and the second portion 122 may be connected before the battery 20 is arranged. For example, the bottom plate 11 is connected to the second portion 122, and the battery 20 is fixed on the first portion 121, and the first portion 121 and the second portion 122 are connected afterwards.

In an embodiment, an assembly method for battery pack is used to form the above-described battery pack.

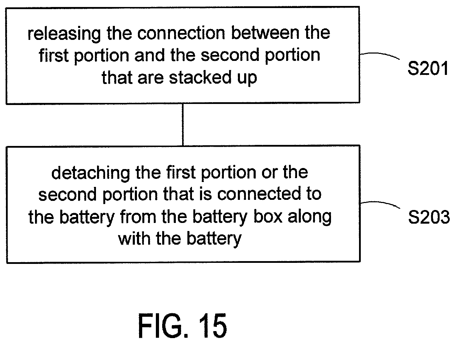

An embodiment of the present disclosure further provides a disassembly method for a battery pack. Please refer to FIG. 15. The disassembly method for a battery pack includes the following steps.

S201, Releasing the connection between the first portion 121 and the second portion 122 that are stacked up.

S203, Detaching the first portion 121 or the second portion 122 to which the battery 20 is connected from the battery box 10 along with the battery 20.

In the disassembly method for the battery pack in an embodiment of the present disclosure, by releasing the connection between the first portion 121 and the second portion 122 that are stacked up, it is possible to detach the first portion 121 or the second portion 122 to which the battery 20 is connected from the battery box 10 along with the battery 20. In this manner, the disassembly efficiency of the battery 20 may be improved, thereby saving the maintenance cost of the battery pack.

In an embodiment, the disassembly method for the battery pack further includes the following. Before releasing the connection between the first portion 121 and the second portion 122 that are stacked up, detaching the bottom plate 11 from the main frame 12, such that the second portion 122 and the battery 20 are simultaneously removed from the battery box 10, thereby improving the disassembly efficiency of the battery 20. The disassembly of the second portion 122 and the battery 20 may be completed subsequently, so as to realize the maintenance or replacement of the battery 20.

In an embodiment, the step of detaching the first portion 121 or the second portion 122 to which the battery 20 is connected from the battery box 10 along with the battery 20 includes the following. Detaching the bottom plate 11, the second portion 122 and the battery 20 from the battery box 10 simultaneously, so as to improve the disassembly efficiency of the battery 20. Thereafter, the battery 20 may be removed, so as to achieve maintenance or replacement of the battery 20, and the bottom plate 11 and the second portion 122 may be disassembled or not disassembled.

In an embodiment, the disassembly method for the battery pack further includes the following. Before releasing the connection between the first portion 121 and the second portion 122 that are stacked up, detaching the top cover 13 from the main frame 12, such that the first portion 121 and the battery 20 are simultaneously removed from the battery box 10, and that the removal efficiency of the battery 20 is improved. The removal of the first portion 121 and the battery 20 may be completed subsequently, so as to realize the maintenance or replacement of the battery 20.

In an embodiment, the step of detaching the first portion 121 or the second portion 122 to which the battery 20 is connected from the battery box 10 along with the battery 20 includes the following. Removing the top cover 13, the first portion 121 and the battery 20 from the battery box 10 simultaneously, thereby improving the removal efficiency of the battery 20. The battery 20 may be removed subsequently to achieve maintenance or replacement of the battery 20. The top cover 13 and the first portion 121 may be disassembled or not disassembled.

In an embodiment, the disassembly method for the battery pack further includes the following. After releasing the connection between the first segment 1211 and the second segment 1212, removing the first segment 1211 from the battery box 10, wherein the first battery is removed along with the first segment 1211, and the second battery remains in the battery box 10. In this way, the first battery may be removed alone, so as to facilitate the maintenance of the battery pack and reduce the maintenance cost.

Correspondingly, after releasing the connection between the first segment 1211 and the second segment 1212, the second segment 1212 is removed from the battery box 10, the second battery is removed along with the second segment 1212, and the first battery remains in the battery box 10.

The first portion 121 may include a first segment 1211 and a second segment 1212, and the first segment 1211 and the second segment 1212 are detachably connected to each other. The first battery is fixed on the first segment 1211, and the second battery is fixed on the second segment 1212, so as to prevent the second battery from blocking the first battery and the first segment 1211 from being simultaneously removed from the battery box 10, or prevent the first battery from blocking the second battery and the second segment 1212 from being simultaneously removed from the battery box 10.

The battery 20 may be detached from the battery box 10 along with the first portion 121. Moreover, by setting the first portion 121 as the first segment 1211 and the second segment 1212 that are detachably connected to each other, while the first segment 1211 and the second segment 1212 respectively belong to the two sub-accommodating spaces 1231, and the first battery and the second battery are respectively provided in the two sub-accommodating spaces 1231, when the first battery or the second battery needs to be maintained or replaced, it is possible to only remove the first battery and the first segment 1211 from the battery box 10 simultaneously without removing the second battery. Alternatively, it is possible to only remove the second battery and the second segment 1212 from the battery box 10 simultaneously without removing the first battery, so as to facilitate the maintenance of the battery pack and reduce the maintenance cost.

In an embodiment, after releasing the connection between the third segment 1221 and the fourth segment 1222, the third segment 1221 is removed from the battery box 10, the first battery is removed along with the third segment 1221, and the second battery remains in the battery box 10. In this way, the first battery may be removed alone, so as to facilitate the maintenance of the battery pack and reduce the maintenance cost.

Correspondingly, after releasing the connection between the third segment 1221 and the fourth segment 1222, the fourth segment 1222 is removed from the battery box 10, the second battery is removed along with the fourth segment 1222, and the first battery remains in the battery box 10.

The second portion 122 includes the third segment 1221 and the fourth segment 1222, and the third segment 1221 and the fourth segment 1222 are detachably connected to each other. The first battery is fixed on the third segment 1221, and the second battery is fixed on the fourth segment 1222, so as to prevent the second battery from blocking the first battery and the third segment 1221 from being simultaneously removed from the battery box 10, or to prevent the first battery from blocking the second battery and the fourth segment 1222 from being simultaneously removed from the battery box 10.

The battery 20 may be detached from the battery box 10 along with the second portion 122. Moreover, by setting the second portion 122 as the third segment 1221 and the fourth segment 1222 that are detachably connected to each other, while the third segment 1221 and the fourth segment 1222 respectively belong to the two sub-accommodating spaces 1231, and the first battery and the second battery are respectively provided in the two sub-accommodating spaces 1231, when the first battery or the second battery needs to be maintained or replaced, it is possible to only remove the first battery and the third segment 1221 from the battery box 10 simultaneously without removing the second battery. Alternatively, it is possible to only remove the second battery and the fourth segment 1222 from the battery box 10 simultaneously without removing the first battery, so as to facilitate the maintenance of the battery pack and reduce the maintenance cost.

In an embodiment, the disassembly method for the battery pack is used to disassemble the above-mentioned battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising a battery box (10) and a battery (20), wherein the battery (20) is provided in the battery box (10), the battery box (10) comprises a main frame (12), the main frame (12) comprises a first portion (121) and a second portion (122) that are stacked up, and the first portion (121) and the second portion (122) are detachably connected to each other, the battery (20) is connected to the first portion (121), or the battery (20) is connected to the second portion (122).

2. The battery pack according to claim 1, wherein the battery (20) is bonded with the first portion (121), or the battery is bonded with the second portion (122).

3. The battery pack according to claim 1, wherein the battery box (10) further comprises:
a bottom plate (11), wherein the main frame (12) is connected to the bottom plate (11) to form an accommodating space (123), the battery (20) is arranged in the accommodating space (123), and the bottom plate (11) is connected to a side of the main frame (12) adjacent to the second portion (122).

4. The battery pack according to claim 3, wherein the battery box (10) further comprises:
a top cover (13), connected to an end of the main frame (12) away from the bottom plate (11);
wherein the top cover (13) is connected to another side of the main frame (12) adjacent to the first portion (121).

5. The battery pack according to claim 4, wherein the main frame (12) further comprises a support portion (124), and the battery (20) is in contact with the support portion (124).

6. The battery pack according to claim 5, wherein the support portion (124) extends from the first portion (121), and the battery (20) is located between the support portion (124) and the bottom plate (11).

7. The battery pack according to claim 5, wherein the support portion (124) extends from the second portion (122), and the battery (20) is located between the support portion (124) and the top cover (13).

8. The battery pack according to claim 5, wherein the support portion (124) is arranged in pairs, one of the support portions (124) extends from the first portion (121), and the other one of the support portions (124) extends from the second portion (122), and the battery (20) is located between the pair of support portions (124).

9. The battery pack according to claim 4, wherein the top cover (13) comprises a heat exchange channel, and the top cover (13) is in contact with the battery (20).

10. The battery pack according to claim 9, further comprising a heat conducting portion (30), the heat conducting portion (30) is located between the top cover (13) and the battery (20), such that the top cover (13) and the battery (20) are in contact with each other through the heat conducting portion (30);
wherein the heat conducting portion (30) is a thermally conductive adhesive.

11. The battery pack according to claim 4, further comprising a temperature adjustment plate (40), the temperature adjustment plate (40) is located between the top cover (13) and the battery (20), and the temperature adjustment plate (40) is in contact with the battery (20).

12. The battery pack according to claim 11, wherein the battery pack further comprises a heat conducting portion (30), the heat conducting portion (30) is located between the temperature adjustment plate (40) and the battery (20), such that the temperature adjustment plate (40) is in contact with the battery (20) through the heat conducting portion (30);
wherein the heat conducting portion (30) is a thermally conductive adhesive.

13. The battery pack according to any one of claims 3-12, wherein the battery (20) comprises a pressure relief structure (21), and the pressure relief structure (21) is disposed toward the bottom plate (11);
wherein the pressure relief structure (21) and the bottom plate (11) are disposed at intervals.

14. The battery pack according to claim 13, wherein the battery (20) further comprises a terminal assembly (22), and the terminal assembly (22) and the pressure relief structure (21) are located on a same side of the battery (20);
wherein the terminal assembly (22) and the bottom plate (11) are arranged at intervals.

15. The battery pack according to any one of claims 3-14, wherein the main frame (12) comprises a side beam (125) arranged around the bottom plate (11) to form the accommodating space (123), and the side beam (125) comprises at least a part of the first portion (121) and the second portion (122).

16. The battery pack according to claim 15, wherein the main frame (12) further comprises a partition beam (126), and the partition beam (126) is located on an inner side of the side beam (125) to separate the accommodating space (123) into at least two sub-accommodating spaces (1231);
wherein the battery (20) is in plurality, the plurality of batteries comprise a first battery and a second battery, and the first battery and the second battery are respectively arranged in the two sub-accommodating spaces (1231).

17. The battery pack according to claim 16, wherein the side beam (125) comprises a part of the first portion (121) and the second portion (122), and the partition beam (126) comprises another part of the first portion (121) and the second portion (122).

18. The battery pack according to claim 3, wherein the main frame (12) comprises:
a side beam (125), arranged around the bottom plate (11) to form the accommodating space (123);
a partition beam (126), located on an inner side of the side beam (125) to separate the accommodating space (123) into at least two sub-accommodating spaces (1231), wherein the partition beam (126) comprises the first portion (121) and the second portion (122);
wherein the battery (20) is in plurality, the plurality of batteries comprise a first battery and a second battery, and the first battery and the second battery are respectively arranged in the two sub-accommodating spaces (1231).

19. The battery pack according to claim 17 or 18, wherein the first portion (121) comprises a first segment (1211) and a second segment (1212), the first segment (1211) and the second segment (1212) are detachably connected to each other, the first battery is fixed on the first segment (1211), and the second battery is fixed on the second segment (1212), so as to prevent the second battery from blocking the first battery and the first segment (1211) from being simultaneously removed from the battery box (10), or to prevent the first battery from blocking the second battery and the second segment (1212) from being simultaneously removed from the battery box (10);
or, the second portion (122) comprises a third segment (1221) and a fourth segment (1222), the third segment (1221) and the fourth segment (1222) are detachably connected to each other, the first battery is fixed on the third segment (1221), and the second battery is fixed on the fourth segment (1222), so as to prevent the second battery from blocking the first battery and the third segment (1221) from being simultaneously removed from the battery box (10), or to prevent the first battery from blocking the second battery and the fourth segment (1222) from being simultaneously removed from the battery box (10).

20. An assembly method for a battery pack, the assembly method comprising: fixing a battery (20) on a main frame (12), wherein the main frame (12) comprises a first portion (121) and a second portion (122) that are stacked up, and the first portion (121) and the second portion (122) are detachably connected to each other.

21. The assembly method for the battery pack according to claim 20, wherein the step of fixing the battery (20) on the main frame (12) comprises:
connecting the first portion (121) and the second portion (122) after connecting the battery (20) to the first portion (121) or the second portion (122).

22. The assembly method for the battery pack according to claim 20, wherein the step of fixing the battery (20) on the main frame (12) comprises:
connecting the battery (20) to at least one of the first portion (121) and the second portion (122) after connecting the first portion (121) and the second portion (122).

23. The assembly method for the battery pack according to claim 20, the assembly method further comprising:
connecting the main frame (12) and a bottom plate (11); and
connecting the main frame (12) and a top cover (13) to seal an accommodating space (123) for placing the battery (20).

24. The assembly method for the battery pack according to claim 23, wherein after the battery (20) is fixed on the main frame (12) and the main frame (12) and the top cover (13) are connected, the main frame (12) and the top cover (13) are inverted, such that an opening of the main frame (12) faces upward, and the bottom plate (11) is connected to the main frame (12) to block the opening of the main frame (12).

25. The assembly method for the battery pack according to claim 23, wherein at least a part of the first portion (121) and the second portion (122) forms a side beam (125), the bottom plate (11) is connected to the second portion (122), and the top cover (13) is connected to the first portion (121).

26. The assembly method for the battery pack according to claim 23, wherein the first portion (121) and the second portion (122) form a partition beam (126), the bottom plate (11) and the top cover (13) are both connected to a side beam (125), or the bottom plate (11) and the top cover (13) are respectively connected to the second portion (122) and the first portion (121).

27. The assembly method for the battery pack according to claim 26, wherein after the battery (20) is connected to at least one of the first portion (121) and the second portion (122), the connected first portion (121) and the second portion (122) are connected to the side beam (125).

28. The assembly method for the battery pack according to claim 23, wherein a pressure relief structure (21) and a terminal assembly (22) of the battery (20) are disposed toward the bottom plate (11).

29. The assembly method for the battery pack according to claim 28, wherein a side of the battery (20) provided with the pressure relief structure (21) and the terminal assembly (22) is disposed on a support portion (124) of the main frame (12);
or, another side of the battery (20) facing away from the side of the battery (20) provided with the pressure relief structure (21) and the terminal assembly (22) is disposed on the support portion (124) of the main frame (12).

30. A disassembly method for a battery pack, the disassembly method comprising:
releasing a connection between a first portion (121) and a second portion (122) that are stacked up; and
detaching the first portion (121) or the second portion (122) that is connected to a battery (20) from a battery box (10) along with the battery (20).

31. The disassembly method for the battery pack according to claim 30, the disassembly method further comprising:
before releasing the connection between the first portion (121) and the second portion (122) that are stacked up, detaching a bottom plate (11) from a main frame (12), such that the second portion (122) and the battery (20) are simultaneously removed from the battery box (10).

32. The disassembly method for the battery pack according to claim 30, wherein the step of detaching the first portion (121) or the second portion (122) that is connected to the battery (20) from the battery box (10) along with the battery (20) comprises:
detaching a bottom plate (11), the second portion (122) and the battery (20) from the battery box (10) simultaneously.

33. The disassembly method for the battery pack according to claim 30, the disassembly method further comprising:
before releasing the connection between the first portion (121) and the second portion (122) that are stacked up, detaching a top cover (13) from a main frame (12), such that the first portion (121) and the battery (20) are simultaneously removed from the battery box (10).

34. The disassembly method for the battery pack according to claim 30, wherein the step of detaching the first portion (121) or the second portion (122) that is connected to the battery (20) from the battery box (10) along with the battery (20) comprises:
removing a top cover (13), the first portion (121) and the battery (20) from the battery box (10) simultaneously.

35. The disassembly method for the battery pack according to claim 30, the disassembly method further comprising:
after releasing a connection between a first segment (1211) and a second segment (1212), removing the first segment (1211) from the battery box (10), wherein a first battery is removed along with the first segment (1211), and a second battery remains in the battery box (10);
or, after releasing a connection between a third segment (1221) and a fourth segment (1222), removing the third segment (1221) from the battery box (10), wherein the first battery is removed along with the third segment (1221), and the second battery remains in the battery box (10).
